# EUROPEAN PATENT APPLICATION

(11) **EP 4 575 798 A1**
(43) Date of publication of application: **25.06.2025**
(21) Application number: 23862109.8
(22) Date of filing: 03.08.2023
(51) Int. Cl.: G06F 11/22

(54) **DATA ACCESS METHOD AND APPARATUS, NETWORK INTERFACE CARD, READABLE MEDIUM, AND ELECTRONIC DEVICE**

(30) Priority: 07.09.2022 CN 202211091687
(71) Applicant: Huawei Technologies Co., Ltd., Shenzhen, Guangdong 518129 (CN)
(72) Inventor: HAN, Zhaojiao, Shenzhen, Guangdong 518129 (CN); JIANG, Fanlu, Shenzhen, Guangdong 518129 (CN); YU, Bowei, Shenzhen, Guangdong 518129 (CN); YUAN, Yixing, Shenzhen, Guangdong 518129 (CN); XU, Qiming, Shenzhen, Guangdong 518129 (CN)
(74) Representative: Körber, Martin Hans
(86) International application number: PCT/CN2023/110993
(87) International publication number: WO 2024/051410

(57) **Abstract**

This application relates to the field of computer technologies, and discloses a data access method and apparatus, a network interface card, a readable medium, and an electronic device. The electronic device includes a network interface card, and the network interface card is connected to a storage device via a network. After detecting an instruction that is sent by a processor of a computing device and that is for writing data into the storage device or reading data from the storage device, the network interface card first determines a network-fault-free network link from network links between the computing device and the storage device, and then, according to a NoF protocol and an RDMA protocol, writes the data into the storage device or reads the data from the storage device over the network-fault-free network link. In this way, the computing device does not attempt to exchange data with the storage device over a faulty network link, to help reduce a delay of accessing the storage device by the computing device and improve user experience.

## Description

This application claims priority to Chinese Patent Application No. 202211091687.5, filed with the China National Intellectual Property Administration on September 7, 2022 and entitled "DATA ACCESS METHOD AND APPARATUS, NETWORK INTERFACE CARD, READABLE MEDIUM, AND ELECTRONIC DEVICE", which is incorporated herein by reference in its entirety.

### TECHNICAL FIELD

This application relates to the field of computer technologies, and in particular, to a data access method and apparatus, a network interface card, a readable medium, and an electronic device.

### BACKGROUND

To meet requirements of a user for a speed and a delay of data access, a network storage (NVMe over fabric, NoF) based on a non-volatile memory (NVMe) is growingly widely used. In the NoF, a computing device of the user is connected to a storage device via a network, and accesses data in the storage device according to a NoF protocol, a remote direct memory access (RDMA) protocol, and the like, for example, writes data into the storage device or reads data from the storage device.

However, currently, a processor, for example, a central processing unit (central processing unit, CPU), in the computing device of the user usually runs logic for exchanging data with the storage device according to the NoF protocol and the RDMA protocol. This occupies a hardware resource in the CPU, and affects performance of the CPU in the computing device of the user.

### SUMMARY

In view of this, embodiments of this application provide a data access method and apparatus, a network interface card, a readable medium, and an electronic device. When detecting an instruction for accessing a storage device, a network interface card of a computing device first determines a fault-free network link between the computing device and the storage device, and then accesses the storage device over the fault-free network link, to help reduce a delay of accessing the storage device by the computing device.

According to a first aspect, an embodiment of this application provides a data access method, applied to a computing device, where the computing device includes a first network interface card. The method includes: The first network interface card detects an access instruction, where the access instruction is for accessing a target storage in a storage device. The first network interface card performs fault detection, and determines a network-fault-free first network link from a plurality of network links existing between the first network interface card and the target storage. The first network interface card accesses the target storage over the first network link.

In the solution of the first aspect, when the computing device needs to access the storage device connected to the computing device via a network, for example, sends the access instruction to the first network interface card, the first network interface card first determines, based on the access instruction, the fault-free first network link from the network links between the first network interface card and the target storage of the storage device, and then accesses the target storage over the first network link, for example, writes data into the target storage or reads data from the target storage. In this way, the computing device does not attempt to access the target storage over a faulty network link, to help reduce a delay of accessing the storage device by the computing device.

In a possible implementation of the first aspect, the first network interface card accesses the target storage according to a NoF protocol and an RDMA protocol by using a NoF connection and an RDMA connection that are between the first network interface card and the storage device. Specifically, when a second processor in the first network interface card receives an access instruction of a first processor of the computing device, if the access instruction is for writing first data into the storage device, the second processor may convert the access instruction into a NoF write instruction and send the NoF write instruction to the storage device. The storage device sends an RDMA read request to the second processor in response to the NoF write instruction. In response to the RDMA read request, the second processor directly obtains the first data from the first processor (for example, a buffer of the first processor) and sends the first data to the storage device according to the RDMA protocol. If the access instruction is for reading second data from the target storage, the second processor may convert the access instruction into a NoF read instruction and send the NoF read instruction to the storage device. In response to the NoF read instruction, the storage device obtains the second data from the target storage and sends an RDMA write request to the second processor. In response to the RDMA write request, according to the RDMA protocol, the second processor directly obtains the second data from the storage device and writes the second data into the first processor (for example, the buffer of the first processor).

In this solution, the second processor of the first network interface card directly obtains the first data from the first processor of the computing device according to the RDMA protocol (for example, obtains the first data from the buffer of the first processor) and sends the first data to the storage device. Alternatively, the second processor directly sends, to the first processor according to the RDMA protocol, the second data received from the storage device (for example, sends the second data to the buffer of the first processor). The first data or the second data does not need to be temporarily stored in a memory of the first network interface card, to reduce a quantity of times of forwarding data in the computing device and occupation of a memory of the network interface card, and help further reduce the delay of accessing the storage device by the computing device.

In a possible implementation of the first aspect, the first network interface card further includes a third processor; and the second processor accesses the target storage over the first network link according to the NoF protocol and the RDMA protocol by using the NoF connection and the RDMA connection that are between the first network interface card and the storage device, where the NoF connection and the RDMA connection are established by the third processor with the storage device when the first network interface card is started.

In a possible implementation of the first aspect, the computing device further includes a second network interface card; and the method further includes: When the first network interface card determines that no first network link exists between the first network interface card and the target storage, the second network interface card accesses the target storage over a network-fault-free second network link between the second network interface card and the target storage.

In this solution, the computing device may include a plurality of network interface cards, to help increase a quantity of network links between the computing device and the storage device, and help improve a success rate of accessing the storage device by the computing device.

In a possible implementation of the first aspect, the first network interface card determines, in the following manner, that the network-fault-free first network link exists between the first network interface card and the target storage: When receiving, from the storage device, no information indicating that the first network link is faulty, the first network interface card determines that the network-fault-free first network link between the first network interface card and the target storage exists.

In the solution of this application, when a network link between the storage device and the first network interface card is faulty, the storage device may send, to the first network interface card, fault information of the faulty network link.

In a possible implementation of the first aspect, the second processor or the third processor is any one of the following processors: a field programmable logic gate array, a complex programmable logic device, a domain-specific architecture, a network processor, a digital signal processing circuit, a microcontroller, and a programmable controller.

In this solution, the second processor or the third processor in the first network interface card is the foregoing low-power-consumption processor. In comparison with a processor with general-purpose computing power, the second processor or the third processor in the first network interface card has lower power consumption, to help reduce power consumption of the first network interface card.

In a possible implementation of the first aspect, the access instruction is an NVMe instruction.

According to a second aspect, an embodiment of this application provides a network interface card. The network interface card includes: a bus interface, configured to be connected to a computing device; a network interface, configured to be connected to a remote storage device via a network; and a fourth processor, configured to: perform fault detection when receiving an instruction that is sent by the computing device and that is for accessing a target storage in the storage device, determine a network-fault-free first network link from a plurality of network links existing between the network interface card and the storage device, and access the target storage over the first network link.

In the solution of the second aspect, when receiving the access instruction sent by the computing device, the network interface card first determines the fault-free first network link from network links between the network interface card and the to-be-accessed target storage indicated by the access instruction, and then accesses the target storage over the first network link, for example, writes data into the target storage or reads data from the target storage. In this way, the computing device does not attempt to access the target storage over a faulty network link, to help reduce a delay of accessing the storage device by the computing device.

In a possible implementation of the second aspect, the network interface card further includes a fifth processor, where the fifth processor is configured to: when the network interface card is started, establish a NoF connection and an RDMA connection that are between the network interface card and the storage device; and the fourth processor accesses the target storage over the first network link in the following manner: The fourth processor accesses the target storage according to a NoF protocol and an RDMA protocol by using the NoF connection and the RDMA connection.

In a possible implementation of the second aspect, the fourth processor accesses the target storage by using the NoF connection and the RDMA connection in the following manner: When the access instruction is for writing first data into the target storage, the fourth processor obtains the first data from the computing device, and writes the first data into the target storage over the first network link according to the NoF protocol and the RDMA protocol; and/or when the access instruction is for reading second data from the target storage, according to the NoF protocol and the RDMA protocol, the fourth processor obtains the second data from the target storage and sends the second data to the computing device. Specifically, when the fourth processor in the network interface card receives the access instruction of the computing device, if the access instruction is for writing the first data into the storage device, the fourth processor may convert the access instruction into a NoF write instruction and send the NoF write instruction to the storage device. The storage device sends an RDMA read request to the fourth processor in response to the NoF write instruction. In response to the RDMA read request, the fourth processor directly obtains the first data from the computing device (for example, a buffer of a processor of the computing device) and sends the first data to the storage device according to the RDMA protocol. If the access instruction is for reading the second data from the target storage, the fourth processor may convert the access instruction into a NoF read instruction and send the NoF read instruction to the storage device. In response to the NoF read instruction, the storage device obtains the second data from the target storage and sends an RDMA write request to the fourth processor, and in response to the RDMA write request, according to the RDMA protocol, the fourth processor directly obtains the second data from the storage device and writes the second data into the computing device (for example, the buffer of the processor of the computing device).

In this solution, the fourth processor of the network interface card directly obtains the first data from the computing device according to the RDMA protocol (for example, obtains the first data from the buffer of the processor of the computing device) and sends the first data to the storage device. Alternatively, the fourth processor sends, to the computing device according to the RDMA protocol, the second data received from the storage device (for example, sends the second data to the buffer of the processor of the computing device), and the first data or the second data does not need to be temporarily stored in a memory of the network interface card, to reduce a quantity of times of forwarding data in the network interface card and occupation of the memory of the network interface card, and help further reduce the delay of accessing the storage device by the computing device.

In a possible implementation of the second aspect, the fourth processor or the fifth processor is any one of the following processors: a field programmable logic gate array, a complex programmable logic device, a domain-specific architecture, a network processor, a digital signal processing circuit, a microcontroller, and a programmable controller.

In this solution, the fourth processor or the fifth processor in the first network interface card is the foregoing low-power-consumption processor. In comparison with a processor with general-purpose computing power, the fourth processor or the fifth processor in the first network interface card has lower power consumption, to help reduce power consumption of the network interface card.

In a possible implementation of the second aspect, the access instruction is an NVMe instruction.

According to a third aspect, an embodiment of this application provides an electronic device. The electronic device includes the network interface card provided in any one of the second aspect and the possible implementations of the second aspect.

According to a fourth aspect, an embodiment of this application provides an electronic device. The electronic device includes a network interface card, and the network interface card includes a storage and at least one processor. The storage stores instructions, and when the instructions are executed by the at least one processor, the electronic device is enabled to implement the data access method provided in any one of the first aspect and the possible implementations of the first aspect.

According to a fifth aspect, an embodiment of this application provides a computer-readable storage medium. The computer-readable storage medium stores instructions, and when the instructions are executed by a network interface card, the network interface card is enabled to implement the data access method provided in any one of the first aspect and the possible implementations of the first aspect.

According to a sixth aspect, an embodiment of this application provides a computer program product. When the computer program product runs on a network interface card, the network interface card is enabled to implement the data access method provided in any one of the first aspect and the possible implementations of the first aspect.

According to a seventh aspect, an embodiment of this application provides a data access apparatus. The data access apparatus includes at least one processor and a power supply circuit. The power supply circuit is configured to supply power to the processor, and related program instructions are executed in the at least one processor, to enable the data access apparatus to implement a function of the network interface card or the computing device in the data access method provided in any one of the first aspect and the possible implementations of the first aspect.

According to an eighth aspect, an embodiment of this application provides a computer program product. When the computer program product runs on a network interface card, the network interface card is enabled to implement the data access method provided in any one of the first aspect and the possible implementations of the first aspect.

### BRIEF DESCRIPTION OF DRAWINGS

FIG. 1 is a diagram of a NoF scenario according to some embodiments of this application;
FIG. 2 is a diagram of an architecture of data exchange between a computing device 1 and a storage device 2 according to a NoF protocol and an RDMA protocol according to some embodiments of this application;
FIG. 3 is another diagram of an architecture of data exchange between a computing device 1 and a storage device 2 according to a NoF protocol and an RDMA protocol according to some embodiments of this application;
FIG. 4 is a diagram of a process in which a computing device 1 accesses a storage 23 when a network link between the computing device 1 and the storage 23 is faulty;
FIG. 5 is a diagram of an architecture of data exchange between a computing device 1 and a storage device 2 based on a DPU card 5 according to some embodiments of this application;
FIG. 6 is a diagram of a data transmission path for writing data into a storage unit 231 by a DPU card 5 according to some embodiments of this application;
FIG. 7 is a schematic flowchart of interaction of a data access method according to some embodiments of this application;
FIG. 8 is a diagram of determining a valid communication link between a computing device 1 and a storage device 2 by a DPU card 5 according to some embodiments of this application;
FIG. 9 is a schematic flowchart of determining a valid access path by a processor 531 by using a multipathing module 5321 according to some embodiments of this application;
FIG. 10 is a diagram of performing data exchange with a storage device 2 by a computing device 1 when the computing device 1 includes two DPU cards 5 according to some embodiments of this application;
FIG. 11 is a diagram of an interaction process of a data access method according to some embodiments of this application;
FIG. 12 is a diagram of a hardware structure of a DPU card 5 according to some embodiments of this application;
FIG. 13 is a diagram of a hardware structure of a computing device 1 according to some embodiments of this application;
FIG. 14 is a diagram of a structure of a data access apparatus 1400 according to some embodiments of this application; and
FIG. 15 is a diagram of a structure of a system chip 1500 according to some embodiments of this application.

### DESCRIPTION OF EMBODIMENTS

Illustrative embodiments of this application include but are not limited to a network interface card, an electronic device, and a data access method.

It should be noted that for ease of description, in the following, an electronic device configured to store data is referred to as a storage device; and an electronic device that can obtain data from the storage device or store data in the storage device via a network is referred to as a computing device.

The following describes the technical solutions in embodiments of this application with reference to the accompanying drawings.

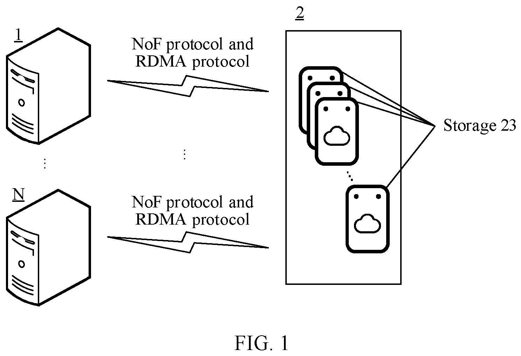

FIG. 1 is a diagram of a NoF scenario according to some embodiments of this application.

As shown in FIG. 1, a storage device 2 includes a plurality of storages 23. A computing device 1 to a computing device N may communicate with the storage device 2 via a network, and the computing device 1 to the computing device N may store data in the storage 23 of the storage device 2 according to a NoF protocol and an RDMA protocol, or read data from the storage 23 of the storage device 2.

In some embodiments, usually, processors, for example, CPUs, of the computing device 1 to the computing device N run logic for exchanging data with the storage device according to the NoF protocol and the RDMA protocol, which occupies a hardware resource in the CPU and affects performance of the CPU of the computing device of a user.

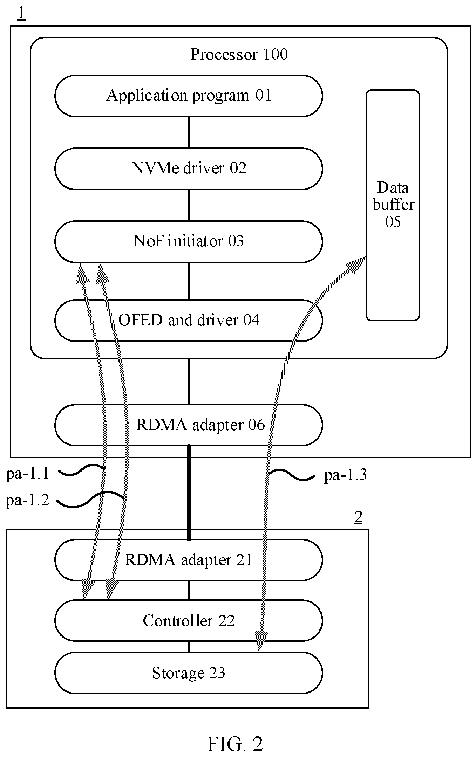

For example, FIG. 2 is a diagram of an architecture of data exchange between a computing device 1 and a storage device 2 according to a NoF protocol and an RDMA protocol according to some embodiments of this application.

As shown in FIG. 2, the computing device 1 includes a processor 100 and an RDMA adapter (also referred to as an RDMA network interface card, RDMA network interface card, RNIC) 06, and the storage device 2 includes an RDMA adapter 21, a controller 22, and a storage 23. The computing device 1 and the storage device 2 establish a network connection by using the RDMA adapter 06 and the RDMA adapter 21.

The processor 100 is configured to run an application program 01, an NVMe driver 02, a NoF initiator 03, RDMA-supported open-source software (open fabrics enterprise distribution, OFED), and a driver 04 that are in the computing device 1.

The NVMe driver 02 is configured to mount the storage 23 in the storage device 2 as an NVMe device, so that an application program, for example, the application program 01, run in the processor 100 can access the storage 23 based on an NVMe instruction, for example, an input/output instruction (input/output instruction, I/O instruction).

The NoF initiator 03 is configured to negotiate with the controller 22 in the storage device 2, to establish an RDMA connection and a NoF connection that are between the computing device 1 and the storage 23 in the storage device 2, and a communication link, for example, a queue pair (queue pair, QP) connection, between the computing device 1 and the storage 23. The NoF initiator 03 is further configured to: receive the NVMe instruction sent by the NVMe driver, convert the NVMe instruction into a NoF instruction, and invoke the OFED and the driver 04 to send the NoF instruction the NoF instruction to the storage device 2.

The OFED and the driver 04 are configured to embed the NoF instruction into an RDMA SEND message in response to the invocation of the NoF initiator 03, so that the RDMA adapter 06 sends the NoF instruction according to the RDMA protocol. The RDMA SEND message is a message that is sent according to the RDMA protocol and that is defined in the RDMA protocol.

The RDMA adapter 06 may be a network interface card (network interface card, NIC) that supports the RDMA protocol. The RDMA adapter 06 is configured to: send, in response to the instruction of the NoF initiator 03, the instruction to the storage device 2 by using a command message packet, and send data in a data buffer 05 to the storage device 2 according to the RDMA protocol in response to a read instruction of the storage device 2, or write, into a data buffer 05 according to the RDMA protocol in response to a write instruction of the storage device 2, data received from the storage device 2.

The data buffer 05 is configured to temporarily store data corresponding to an instruction run by the processor 100.

The RDMA adapter 21 may be a NIC that supports the RDMA protocol. The RDMA adapter 21 is configured to: receive data or an instruction sent by the computing device 1, and forward the received data or instruction to the controller 22, or configured to: receive an instruction sent by the controller 22 or data sent by the storage 23, and forward the instruction or data to the computing device 1.

There may be one or more controllers 22, configured to: be connected to the storage 23 through a PCIe bus, and convert, into the NVMe instruction, the NoF instruction received from the adapter RDMA adapter 06, to write data into the storage 23 or read data from the storage 23.

The storage 23 may include one or more storage media, configured to store data. In some embodiments, the storage 23 may be a solid-state drive (solid-state drive, SSD) that supports the NVMe protocol, and is connected to the controller 22 through the PCIe bus. In some embodiments, the storage 23 may be identified by the computing device 1 as one or more storage media of one NVMe device, and may be referred to as a storage unit. The storage device 2 allocates a unique logic unit number (logic unit number, LUN) to each storage unit, so that the computing device 1 can access each storage unit in the storage device 2 by using the LUN.

It may be understood that in some embodiments, one storage unit may be mounted to at least one controller, and at least one storage medium may be mounted to one controller.

It may be understood that the storage device 2 may be any device that can be accessed according to the NoF protocol and the RDMA protocol, and includes but is not limited to a device that can store data and that is in a form of an external centralized storage or distributed storage, for example, a storage server, a distributed database server, or a data center.

Based on the architecture shown in FIG. 2, the following describes a process of data exchange between the computing device 1 and the storage device 2 by using an example in which the computing device 1 writes data into the storage 23. The process may include the following steps.

S1.1: Start the RDMA adapter 06.

S1.2: The processor 100 performs negotiation by using the NoF initiator 03 and the controller 22, to establish the RDMA connection and the NoF connection that are between the computing device 1 and the storage 23. For example, refer to FIG. 2. The NoF initiator 03 may establish, according to the RDMA protocol and the NoF protocol, sequentially through the OFED, the driver 04, the RDMA adapter 06, the RDMA adapter 21, and the controller 22, and through a path pa-1.1, the RDMA connection and the NoF connection that are between the computing device 1 and the storage 23.

S1.3: The processor 100 stores to-be-written data corresponding to the application program 01 in the data buffer 05, and invokes the NVMe driver 02 to send an NVMe write instruction to the NoF initiator 03.

It may be understood that the NVMe instruction is an instruction according to the NVMe protocol, and includes an NVMe write instruction for writing data into the NVMe device according to the NVMe protocol and an NVMe read instruction for reading data from the NVMe device according to the NVMe protocol.

S1.4: The processor 100 converts the NVMe write instruction into a NoF write instruction by using the NoF initiator 03, establishes a QP connection between the computing device 1 and the storage 23, and invokes the OFED and the driver 04 to send the NoF write instruction to the controller 22. For example, refer to FIG. 2. The NoF initiator 03 may send the NoF write instruction to the controller 22 according to the RDMA protocol and the NoF protocol, sequentially through the OFED, the driver 04, the RDMA adapter 06, the RDMA adapter 21, and the controller 22, and through a path pa-1.2.

It may be understood that the NoF instruction is an instruction according to the NoF protocol, and includes the NoF write instruction for writing data into a NoF device according to the NoF protocol and a NoF read instruction for reading data from the NoF device according to the NoF protocol.

S1.5: The controller 22 sends an RDMA read request to the RDMA adapter 06 in response to the NoF write instruction.

S1.6: The RDMA adapter 06 sends the to-be-written data from the data buffer 05 to the controller 22 in response to the RDMA read request. For example, refer to FIG. 2. The RDMA adapter 06 may send the to-be-written data to the controller 22 sequentially through the data buffer 05, the OFED, the driver 04, the RDMA adapter 06, and the RDMA adapter 21 and through a path pa-1.3.

S1.7: The controller 22 stores the received data in the storage 23.

S1.8: The controller 22 sends a NoF write success response to the RDMA adapter 06.

S1.9: The RDMA adapter 06 forwards the NoF write success response to the NoF initiator 03.

S1.10: The processor 100 sends, in response to the NoF write success response, an NVMe write success response to the NVMe driver 02 by using the NoF initiator 03.

It can be learned from steps S1.1 to S1.10 that in the process of data exchange between the computing device 1 and the storage device 2, NoF-related operations, for example, step S1.2, step S1.4, and step S1.10, are all performed by the processor 100, which occupies a hardware resource in the processor 100, reduces a hardware resource that can be used by a user to execute another application, and affects user experience.

In view of this, in some embodiments, the RDMA adapter may be replaced with a data processing unit (data processing unit, DPU) card including a general-purpose processor (for example, a CPU), and the DPU card performs a part of operations performed by the processor 100 in FIG. 2, so that a quantity of hardware resources that are of the processor 100 and that are occupied in the process of data exchange between the computing device 1 and the storage device 2 can be reduced.

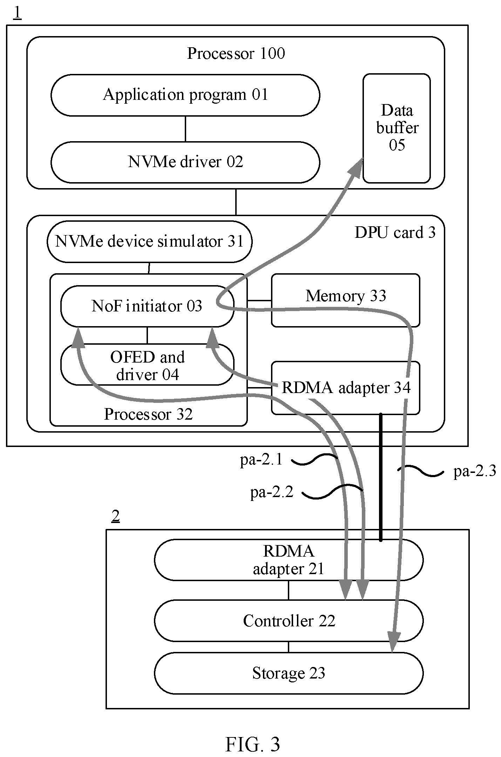

For example, FIG. 3 is another diagram of an architecture of data exchange between a computing device 1 and a storage device 2 according to a NoF protocol and an RDMA protocol according to some embodiments of this application.

As shown in FIG. 3, the computing device 1 includes a processor 100 and a DPU card 3. The DPU card 3 includes an NVMe device simulator 31, a processor 32, a memory 33, and an RDMA adapter 34. In comparison with the embodiment shown in FIG. 2, a NoF initiator 03, OFED, and a driver 04 run in the processor 32.

In the DPU card 3, the NVMe device simulator 31 is connected to the processor 100 through a PCIe bus, and mounts the DPU card 3 as an NVMe device to the processor 100, so that the processor 100 can access the DPU card 3 by using an NVMe instruction.

The processor 32 may be a high-performance processor that can provide general-purpose computing power, for example, a CPU or a graphics processing unit (graphics processing unit, GPU).

The memory 33 may be a double data rate synchronous dynamic random access memory (double data rate synchronous dynamic random access memory, DDR SDRAM) or another storage, and is configured to temporarily store data and instructions, for example, temporarily store data obtained from a data buffer 05.

For a function of the RDMA adapter 34, refer to the descriptions of the foregoing RDMA adapter 06. Details are not described herein.

Based on the architecture shown in FIG. 3, the following describes a process of data exchange between the computing device 1 and the storage device 2 by using an example in which the computing device 1 writes data into a storage 23. The process may include the following steps.

S2.1: The DPU card 3 is started, and the NVMe device simulator 31 mounts the DPU card 3 as the NVMe to the processor 100.

S2.2: The processor 32 performs negotiation by using the NoF initiator 03 and a controller 22, to establish an RDMA connection and a NoF connection that are between the computing device 1 and the storage 23. For example, refer to FIG. 3. The NoF initiator 03 may establish, according to the RDMA protocol and the NoF protocol, sequentially through the OFED, a driver 04, the RDMA adapter 34, an RDMA adapter 21, and the controller 22, and through a path pa-2.1, the RDMA connection and the NoF connection that are between the computing device 1 and the storage 23.

S2.3: The processor 100 stores to-be-written data corresponding to an application program 01 in the data buffer 05, and invokes an NVMe driver 02 to send an NVMe write instruction to the NVMe device simulator 31.

S2.4: The NVMe device simulator 31 sends the NVMe write instruction to the NoF initiator 03.

S2.5: The processor 32 reads the to-be-written data from the data buffer 05 to the memory 33 by using the NoF initiator 03, converts the NVMe write instruction into a NoF I/O write instruction, establishes a QP connection between the computing device 1 and the storage 23, and invokes the OFED and the driver 04 to send a NoF write instruction to the controller 22. For example, refer to FIG. 3. The NoF initiator 03 may send the NoF write instruction to the controller 22 according to the RDMA protocol and the NoF protocol, sequentially through the OFED, the driver 04, the RDMA adapter 34, the RDMA adapter 21, and the controller 22, and through a path pa-2.2.

S2.6: The controller 22 sends an RDMA read request to the RDMA adapter 34 in response to the NoF write instruction.

S2.7: The RDMA adapter 34 sends the to-be-written data from the memory 33 to the controller 22 in response to the RDMA read request.

S2.8: The controller 22 stores the received data in the storage 23.

S2.9: The controller 22 sends a NoF write success response to the RDMA adapter 34.

S2.10: The RDMA adapter 34 forwards the NoF write success response to the NoF initiator 03.

S2.11: The processor 32 sends, in response to the NoF write success response, an NVMe write success response to the NVMe driver 02 through the NVMe device simulator 31 by using the NoF initiator 03.

It can be learned from steps S2.1 to S2.11 that in the process of data exchange between the computing device 1 and the storage device 2, NoF-related operations, for example, step S2.1, step S2.2, step S2.4, step S2.5, step S2.7, step S2.10, and step S2.11, are all performed by the DPU card 3, and a part of operations in the embodiment shown in FIG. 2 are offloaded from the processor 100. In this way, a hardware resource that is in the processor 100 and that is occupied in the process of data exchange between the computing device 1 and the storage device 2 is reduced, so that a hardware resource that can be for executing another application and that is in the processor 100 is increased. However, power consumption of the processor 32 having the general-purpose computing power is high, and it can be learned from a path pa-2.3 in FIG. 3 that the to-be-written data corresponding to the application program 01 can be sent to the storage device 2 only sequentially through the data buffer 05, the processor 32, the memory 33, the RDMA adapter 34, and other physical components. Consequently, a large quantity of physical components are passed through, causing a high delay.

In addition, in the embodiments shown in FIG. 2 and FIG. 3, when a plurality of network links between the computing device 1 and the storage 23 exists, because the computing device 1 cannot obtain whether each network link is faulty, the computing device 1 needs to attempt to send the to-be-written data to the storage 23 or obtain data from the storage 23 over the network links one by one based on priorities of the network links. If a network link that is with a higher priority and that is between the computing device 1 and the storage 23 is faulty, the computing device 1 can find a fault-free network link only after at least one attempt failure, and store the to-be-written data in the storage 23 over the network-fault-free network link. As a result, a delay of sending the to-be-written data from the computing device 1 to the storage 23 is further increased.

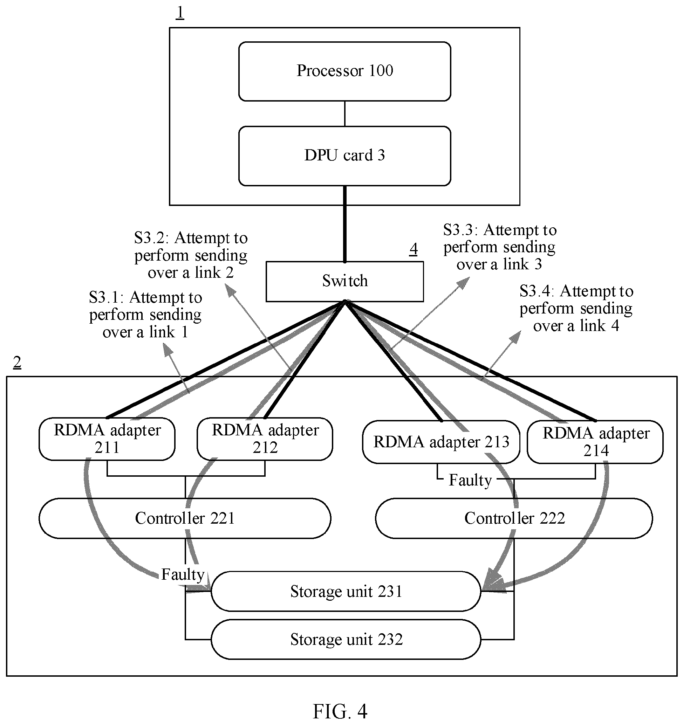

For example, FIG. 4 is a diagram of a process in which a computing device 1 accesses a storage 23 when a network link between the computing device 1 and the storage 23 is faulty.

Refer to FIG. 4. A DPU card 3 and a switch 4 that are of the computing device 1 establish a network connection, and the switch 4 separately establishes network connections to an RDMA adapter 211, an RDMA adapter 212, an RDMA adapter 213, and an RDMA adapter 214 that are in a storage device 2. The RDMA adapter 211 and the RDMA adapter 212 are connected to a storage unit 231 and a storage unit 232 through a controller 221; and the RDMA adapter 213 and the RDMA adapter 214 are connected to the storage unit 231 and the storage unit 232 through a controller 222.

It is assumed that a storage unit to be accessed by the computing device 1 is the storage unit 231, and there are four network links between the computing device 1 and the storage unit 231 in descending order of priorities: a link 1: computing device 1→switch 4→RDMA adapter 211 →controller 221→storage unit 231; a link 2: computing device 1→switch 4→RDMA adapter 212→controller 221→storage unit 231; a link 3: computing device 1→switch 4→RDMA adapter 213→controller 222→storage unit 231; and a link 4: computing device 1→switch 4→RDMA adapter 214→controller 222→storage unit 231.

It is assumed that a network link between the controller 221 and the storage unit 231 is faulty, and a network link between the RDMA adapter 213 and the controller 222 is faulty, that is, the link 1 to the link 3 are faulty. When the computing device 1 writes to-be-written data into the storage unit 231, a data conversion process includes the following steps.

S3.1: The DPU card 3 attempts to perform sending over the link 1, to be specific, the DPU card 3 sends the to-be-written data to the storage unit 231 over the link 1.

S3.2: The DPU card 3 attempts to perform sending over the link 2, to be specific, if receiving no sending success response within preset timeout duration (for example, 1 second, 2 seconds, or 5 seconds), the DPU card 3 sends the to-be-written data to the storage unit 231 over the link 2.

S3.3: The DPU card 3 attempts to perform sending over the link 3, to be specific, if receiving no sending success response within preset timeout duration, the DPU card 3 sends the to-be-written data to the storage unit 231 over the link 3, and receives no response within preset timeout duration.

S3.4: The DPU card 3 attempts to perform sending over the link 1, to be specific, if receiving no sending success response within preset timeout duration, the DPU card 3 sends the to-be-written data to the storage unit 231 over the link 4, and the data is successfully written.

In this case, the computing device 1 needs to attempt one by one based on the priorities of the network links. When the link 1 to the link 3 are faulty, the fault-free link 4 can be found only after three pieces of preset timeout duration. This increases a delay of writing the to-be-written data from the computing device 1 into the storage unit 231, and affects user experience.

To reduce power consumption of a DPU card and avoid a data write delay caused by a faulty network link between a computing device and a storage unit, an embodiment of this application provides a DPU card, used in the computing device. The DPU card includes a low-power-consumption processor, for example, an application-specific integrated circuit (application-specific integrated circuit, ASIC). Correspondingly, an embodiment of this application may provide a data access method, applied to a computing device including the foregoing DPU card. The method includes: The computing device runs the foregoing NoF initiator, OFED, and driver through the low-power-consumption processor in the DPU card, to establish an RDMA connection and a NoF connection that are between the DPU card and a storage device. In addition, after detecting an instruction that is sent by the processor of the computing device and that is for writing data into the storage device or reading data from the storage device, the DPU card first determines, through the low-power-consumption processor, a network-fault-free network link from network links between the computing device and the storage device, and then writes the data into the storage device or reads the data from the storage device over the network-fault-free network link. In this way, the DPU card has the low-power-consumption processor, to help reduce power consumption of the DPU card. In addition, because the low-power-consumption processor performs data exchange with the storage device over the determined fault-free network link, the computing device does not attempt to perform data exchange with the storage device over a faulty network link, to help reduce a delay of accessing the storage device by the computing device and improve user experience.

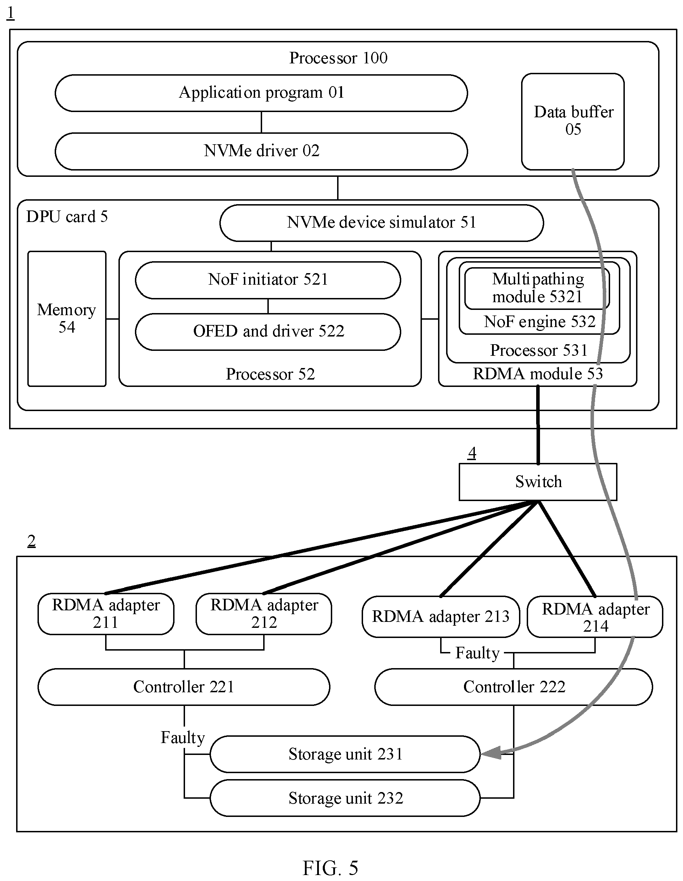

Specifically, FIG. 5 is a diagram of an architecture of data exchange between a computing device 1 and a storage device 2 based on a DPU card 5 according to some embodiments of this application.

As shown in FIG. 5, the DPU card 5 includes an NVMe device simulator 51, a processor 52, an RDMA module 53, and a memory 54, and the RDMA module 53 includes a processor 531.

The NVMe device simulator 51 is configured to: be connected to a processor 100 of the computing device 1 in the DPU card 5 through a PCIe bus, and mount the DPU card 5 as an NVMe device to the processor 100, so that the processor 100 can access the DPU card 5 by using an NVMe instruction.

The processor 52 may be a low-power-consumption processor that can run a NoF initiator 521, OFED, and a driver 522, and is configured to establish an RDMA connection and a NoF connection that are between the DPU card 5 and a storage device. For functions of the NoF initiator 521, the OFED, and the driver 522, refer to the descriptions of the foregoing NoF initiator 03, OFED, and driver 04. Details are not described herein.

For example, in some embodiments, the processor 52 may be a field programmable logic gate array (field programmable gate array, FPGA), a complex programmable logic device (CPLD), a domain-specific architecture (DSA), or another ASIC, or may be a network processor (NP), a digital signal processing circuit (DSP), a microcontroller (micro controller unit, MCU), a programmable controller (programmable logic device, PLD), or another low-power-consumption processor.

It may be understood that in some other embodiments, the processor 52 may alternatively be another ASIC. This is not limited herein.

The RDMA module 53 is connected to an RDMA adapter 21 of the storage device 2. The RDMA module 53 may include the processor 531, configured to: send an instruction and data to the storage device 2 according to an RDMA protocol and a NoF protocol, or receive an instruction and data from the storage device 2 and forward the instruction and the data to the processor 100; and determine a status of a communication link between the computing device 1 and each storage unit in the storage device 2, and perform data exchange with the storage unit in the storage device 2 over a fault-free communication link.

Specifically, in some embodiments, the processor 531 may run a NoF engine 532 to convert the NVMe instruction into a NoF instruction, determine a status of each network link between the DPU card 5 and a to-be-accessed storage unit by using a multipathing module 5321, and send the NoF instruction, the data, and the like to the storage device over the fault-free network link.

In some embodiments, the processor 531 may be an ASIC, for example, an FPGA, a CPLD, a DSA, an NP, a DSP, an MCU, or a PLD, that can run the NoF engine 532 and the multipathing module 5321. In some other embodiments, the processor 531 may alternatively be an ASIC of another type. This is not limited herein.

It may be understood that the NoF engine is a software module that is configured to exchange data according to the NoF protocol and that is defined in the NoF protocol.

The memory 54 may be a double data rate synchronous dynamic random access memory or another storage, and is configured to temporarily store data and instructions.

It may be understood that in some other embodiments, the DPU card 5 may include more or fewer modules, or may combine or split a part of modules. This is not limited herein.

It may be understood that the DPU card 5 in this embodiment of the present invention has a network communication function. From a perspective of functions, the DPU card 5 may also be referred to as a network interface card, a network interface controller (network interface controller), a network adapter (network adapter), an adapter, or the like, or a local area network adapter (LAN adapter), and is a piece of computer hardware designed to allow a computer to perform communication on a computer network.

In comparison with the DPU card 3, in the DPU card 5, the processor 52 establishes the RDMA connection and the NoF connection to the storage 23, and the processor 531 directly sends data in a data buffer 05 to the storage device 2 and the data does not need to be temporarily stored in the memory 54 of the DPU card 5, to reduce a quantity of times of forwarding the data in the DPU card 5 and occupation of the memory 54 of the DPU card 5, and increase a data sending speed. In addition, when sending the data in the data buffer 05 to the storage device 2, the processor 531 first determines a fault-free network link between the DPU card 5 and the storage device 2, and then sends the data to the storage device 2 over the determined fault-free network link. In this way, the computing device 1 does not need to attempt to send the data to the storage device over a faulty network link, to reduce a delay of accessing the storage device 2 by the DPU card 5.

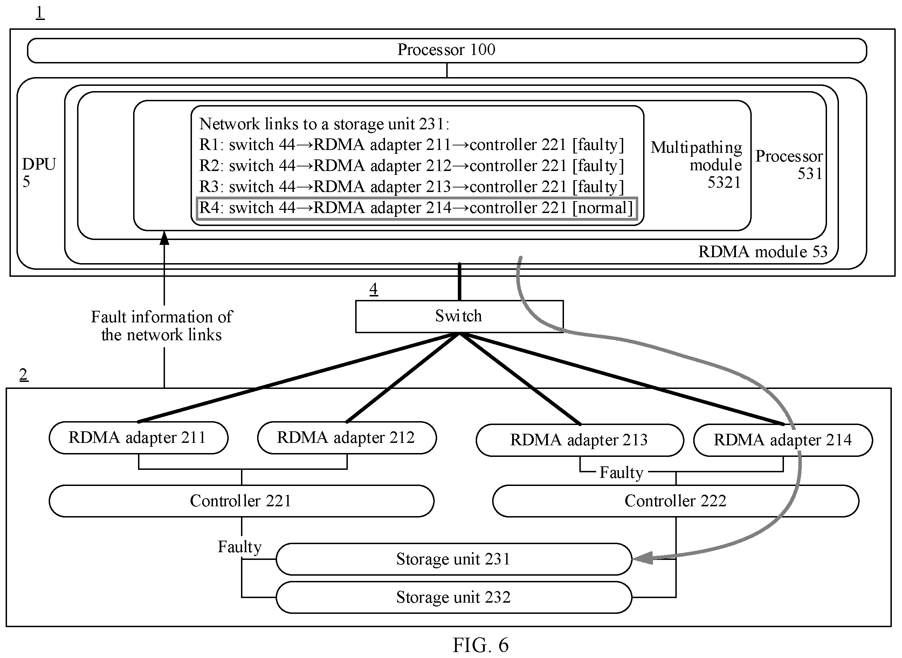

For example, FIG. 6 is a diagram of a data transmission path for writing data into a storage unit 231 by a DPU card 5 according to some embodiments of this application.

Refer to FIG. 6. A processor 531 may run a multipathing module 5321 to obtain and record a network status of each network link between the DPU card 5 and the storage unit 231 in real time, that is, whether each network link is faulty. As shown in FIG. 6, there are four network links between the DPU card 5 and the storage unit 231, that is, a network link R1: switch 4→RDMA adapter 211→controller 221; a network link R2: switch 4→RDMA adapter 212→controller 221; a network link R3: switch 4→RDMA adapter 213→controller 222; and a network link R4: switch 4→RDMA adapter 214→controller 222.

When a link between the controller 221 and the storage unit 231 is faulty, and a link between the RDMA adapter 213 and the controller 222 is faulty, a storage device 2 may send fault information to the processor 531, so that the processor 531 can detect, by using the multipathing module 5321, that the network link R1, the network link R2, and the network link R3 are all faulty. The processor 531 may write data into the storage unit 231 sequentially through the switch 4, the RDMA adapter 214, and the controller 222 over the fault-free network link R4, and does not attempt one by one based on priorities of the network links as in the embodiment shown in FIG. 4, to reduce a delay of accessing the storage device 2 by the DPU card 5.

With reference to the architecture shown in FIG. 5, the following describes in detail the technical solutions of this application by using an example in which a computing device 1 writes data into a storage device 2.

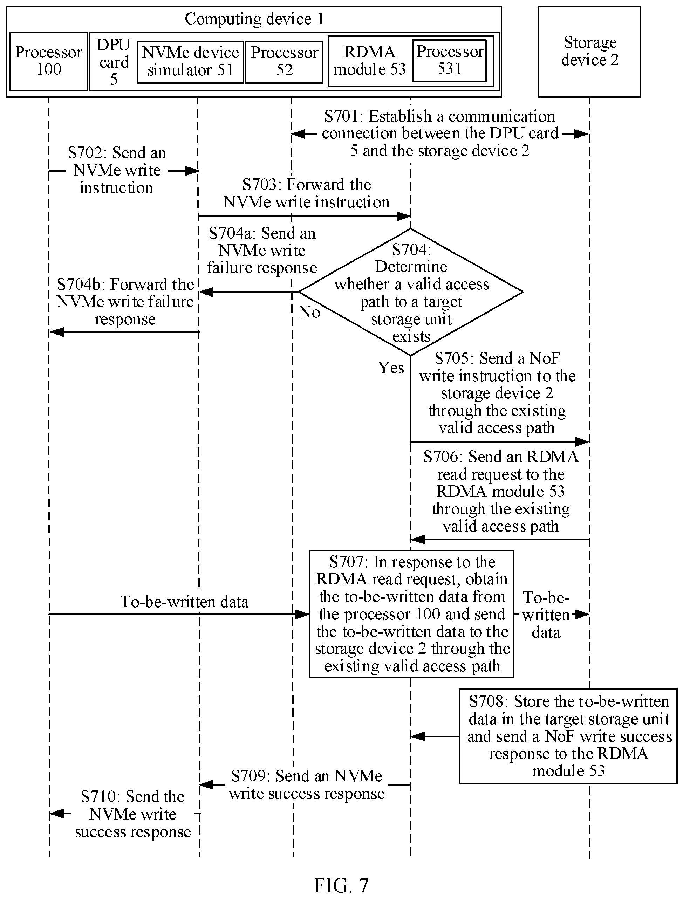

Specifically, FIG. 7 is a schematic flowchart of interaction of a data access method according to some embodiments of this application. As shown in FIG. 7, the interaction procedure includes the following steps.

S701: A processor 52 establishes a communication connection between a DPU card 5 and a storage device 2.

For example, the processor 52 may establish the communication connection between the DPU card 5 and the storage device 2 after an NVMe device simulator 51 mounts the DPU card 5 as an NVMe device to a processor 100.

In some embodiments, the communication connection between the DPU card 5 and the storage device 2 may include an RDMA connection and a NoF connection. Therefore, the processor 52 may negotiate with a controller in the storage device 2, for example, the foregoing controller 221/222, by running a NoF initiator 521, to establish the RDMA connection and the NoF connection that are between the DPU card 5 and the storage device 2.

It may be understood that in some other embodiments, the communication connection between the DPU card 5 and the storage device 2 may further include another connection, for example, a TCP/an IP protocol connection. This is not limited herein.

It may be understood that after the RDMA connection and the NoF connection are established between the DPU card 5 and the storage device 2, a storage unit 231 and a storage unit 232 are presented as NVMe devices to an application program in a computing device 1, so that the application program in the computing device 1 can access the NVMe devices by using an NVMe instruction, to access the storage unit 231 and the storage unit 232.

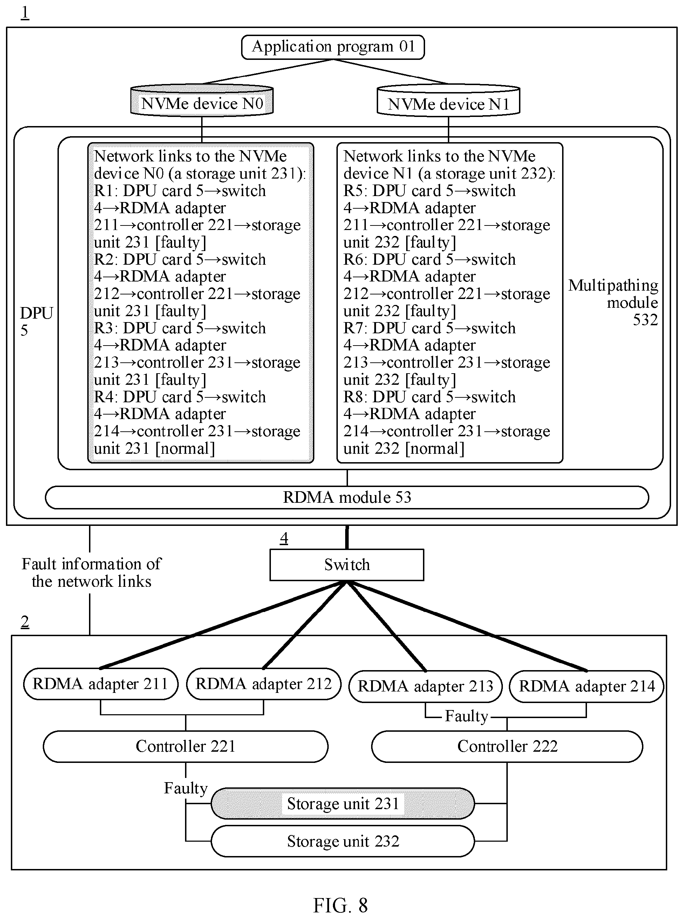

For example, refer to FIG. 8. The DPU card 5 may mount the storage unit 231 as an NVMe device N0, and mount the storage unit 232 as an NVMe device N1. Therefore, accessing the NVMe device N0 by an application program 01 is accessing the storage unit 231, and accessing the NVMe device N1 is accessing the storage unit 232. It may be understood that in some embodiments, each storage unit may correspond to a unique LUN, so that the application program in the computing device 1 can access different storage units based on different LUNs.

S702: The processor 100 sends an NVMe write instruction to the NVMe device simulator 51.

For example, when the application program 01 needs to write data into a storage unit in the storage device 2, the processor 100 sends the NVMe write instruction to the NVMe simulator 51.

For example, in some embodiments, the NVMe write instruction may include an address that is of the to-be-written data and that is in a data buffer 05, and an identifier of the storage unit (referred to as a target storage unit below) into which data is to be written, for example, the foregoing LUN.

S703: The NVMe device simulator 51 forwards the NVMe write instruction to a processor 531.

For example, after receiving the NVMe write instruction, the NVMe device simulator 51 forwards the NVMe write instruction to the processor 531.

For example, in some embodiments, a NoF engine 532 runs in the processor 531, and the NVMe device simulator 51 may forward the NVMe write instruction to an application programming interface (application programming interface, API) of the NoF engine 532.

S704: The processor 531 determines whether a valid access path to the target storage unit exists.

For example, after receiving the NVMe write instruction, the processor 531 may determine, based on the identifier that is of the target storage unit and that is in the NVMe write instruction, whether the valid access path to the target storage unit exists. If the valid access path exists, it indicates that the to-be-written data can be written into the target storage unit, and step S705 is performed; if no valid access path exists, it indicates that the to-be-written data cannot be written into the target storage unit, and step S704a is performed.

It may be understood that the valid access path means that no faulty network link exists between the DPU card 5 and the target storage unit. In some embodiments, when receiving a case that a network link is faulty and that is reported by the storage device 2, the processor 531 may determine the network link as a faulty network link; or the processor 531 may determine, as a faulty link, a network link whose average duration with the DPU card 5 within preset duration is greater than a preset value.

It may be understood that in some embodiments, after the RDMA connection and the NoF connection are established between the DPU card 5 and the storage device 2, the processor 531 may obtain, from the storage device 2, a network status of a network link between the DPU card 5 and each storage unit in the storage device 232 by running a multipathing module 5321. For example, refer to FIG. 8. There are four network links between the DPU card 5 and the storage unit 231, that is, a network link R1: switch 4→RDMA adapter 211→controller 221→storage unit 231; a network link R2: switch 4→RDMA adapter 212→controller 221→storage unit 231; a network link R3: switch 4→RDMA adapter 213→controller 222→storage unit 231; and a network link R4: switch 4→RDMA adapter 214→controller 222→storage unit 231. There are four network links between the DPU card 5 and the storage unit 232, that is, a network link R5: switch 4→RDMA adapter 211 →controller 221→storage unit 232; a network link R6: switch 4→RDMA adapter 212→controller 221→storage unit 232; a network link R7: switch 4→RDMA adapter 213→controller 222→storage unit 232; and a network link R8: switch 4→RDMA adapter 214→controller 222→storage unit 232. The network link R1 to the network link R3, and the network link R5 to the network link R7 are faulty, and the network link R4 and the network link R8 are normal.

Therefore, when the target storage unit is the storage unit 231, the processor 531 may determine that the valid access path, that is, the network link R4, to the target storage unit exists, and step S705 is performed.

It may be understood that in some embodiments, each controller or storage in the storage device 2 may actively report information about a faulty network link to the DPU card 5. This is not limited herein.

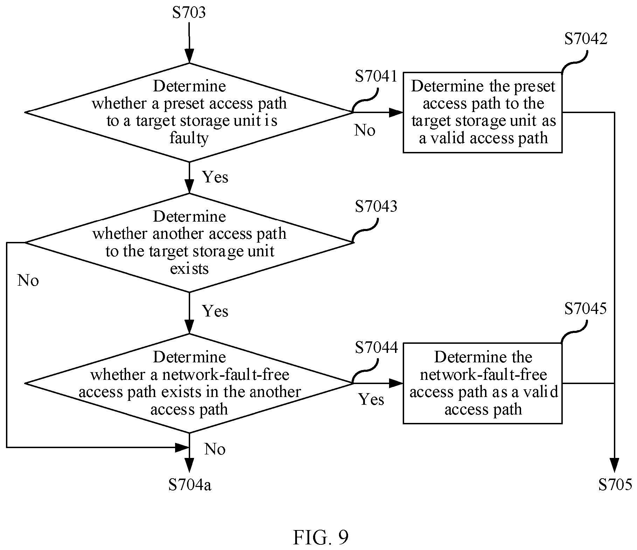

It may be understood that in some embodiments, the multipathing module 5321 may set a preset access path to each storage unit. The multipathing module 5321 may first determine whether the preset path is a valid access path, and then determine whether another path is a valid access path, to determine a valid access path. For example, FIG. 9 is a schematic flowchart of determining a valid access path by a processor 531 by using a multipathing module 5321 according to some embodiments of this application. As shown in FIG. 9, the procedure includes the following steps.

S7041: Determine whether a preset access path to a target storage unit is faulty.

The processor 531 may first determine, by using the multipathing module 5321, whether the preset access path is faulty. If the preset access path is faulty, it indicates that the target storage unit needs to be accessed through another path, and step S7043 is performed; if the preset access path is fault-free, it indicates that the target storage unit may be accessed through the preset access path, and step S7042 is performed.

For example, in some embodiments, one storage unit may correspond to one primary storage node and at least one backup storage node, and the preset access path may be one of at least one communication link between a DPU card 5 and the primary storage node.

S7042: Determine the preset access path to the target storage unit as the valid access path.

The processor 531 may determine the preset access path as the valid access path when the preset access path is network-fault-free, and step S705 is performed.

S7043: Determine whether another access path to the target storage unit exists.

The processor 531 may determine, when the preset access path is faulty, whether the another access path exists. If the another access path exists, step S7044 is performed for further determining; if no another access path exists, it indicates that no available communication link exists for accessing the target storage unit, and step S704a is performed.

S7044: Determine whether a network-fault-free access path exists in the another access path.

When storing the another access path, the processor 531 may determine whether the network-fault-free access path is stored in the another access path. If the network-fault-free access path exists in the another access path, it indicates that the target storage unit may be accessed through the path, and step S705 is performed; if no network-fault-free access path exists in the another access path, it indicates that no available communication link exists for accessing the target storage unit, and step S704a is performed.

S7045: Determine the existing network-fault-free access path as the valid access path.

The processor 531 determines the existing network-fault-free access path as the valid access path, and step S705 is performed.

S704a: The processor 531 sends an NVMe write failure response to an NVMe device simulator 51.

For example, when determining that no valid access path to the target storage unit exists, the processor 531 sends the NVMe write failure response to the NVMe device simulator 51.

It may be understood that the NVMe write failure response indicates that the foregoing NVMe write instruction fails to be executed.

S704b: The NVMe device simulator 51 forwards the NVMe write failure response to a processor 100.

After receiving the NVMe write failure response, the NVMe device simulator 51 forwards the NVMe write failure response to the processor 100.

It may be understood that in some embodiments, after receiving the NVMe write failure response, the processor 100 may perform a re-attempt or store to-be-written data in a local storage or another storage unit of a storage device 2.

S705: The processor 531 sends a NoF write instruction to the storage device 2 through the existing valid access path.

For example, when determining the valid access path to the target storage unit, the processor 531 converts an NVMe write instruction into the NoF write instruction, and sends the NoF write instruction to the storage device 2 by using an RDMA send message.

For example, for the case shown in FIG. 8, the processor 531 may send the NoF write instruction to the storage device 2 through a network link 4 by using the RDMA send message.

It may be understood that the NoF write instruction includes an address that is of the to-be-written data and that is in a data buffer 05, an internet protocol address (internet protocol address, IP address) of the DPU card 5, and an identifier of the target storage unit.

S706: The storage device 2 sends an RDMA read request to an RDMA module 53 through the existing valid access path.

For example, after receiving the NoF write instruction, the storage device 2 may send the RDMA read request to the RDMA module 53 based on the IP address and the address that is of the to-be-written data and that is in the data buffer 05 in the NoF write instruction.

It may be understood that the RDMA read request includes an address that is of to-be-read data and that is in the data buffer 05 (that is, the address that is of the to-be-written data and that is in the data buffer 05).

S707: In response to the RDMA read request, the processor 531 obtains the to-be-written data from the processor 100 and sends the to-be-written data to the storage device 2 through the existing valid access path.

For example, after receiving the RDMA read request, the processor 531 may obtain the to-be-written data from the data buffer 05 based on the address that is of the to-be-read data, that is in the data buffer 05, and that is in the RDMA request, and then send the to-be-written data to the storage device 2 through the existing valid access path according to an RDMA protocol.

S708: The storage device 2 stores the to-be-written data in the target storage unit, and sends a NoF write success response to the RDMA module 53.

For example, after receiving the to-be-written data, the storage device 2 may write the received to-be-written data into a corresponding target storage unit based on the identifier (for example, a LUN) that is of the target storage unit and that is recorded in the NoF write instruction, and send the NoF write success response to the RDMA module 53.

It may be understood that the NoF write success response indicates that the NoF write instruction has been successfully executed, to be specific, the to-be-written data has been successfully written into the target storage unit.

S709: The processor 531 sends an NVMe write success response to the NVMe device simulator 51.

For example, after receiving the NoF write success response, the processor 531 sends the NVMe write success response to the NVMe device simulator 51.

It may be understood that the NVMe write success response indicates that the NVMe write instruction sent by the NVMe device simulator 51 has been successfully executed, to be specific, the to-be-written data has been successfully written into the target storage unit.

S710: The NVMe device simulator 51 sends the NVMe write success response to the processor 100.

For example, after receiving the NVMe write success response, the NVMe device simulator 51 sends the NVMe write success response to the processor 100.

According to the method provided in this embodiment of this application, when the computing device 1 writes data into the target storage unit in the storage device 2 by using the DPU card 5, the DPU card 5 first determines the valid access path to the target storage unit, and then transfers the to-be-written data to the storage device 2 through the valid access path. In this way, the computing device 1 does not attempt to send data to the storage device 2 over a faulty network link, a delay of writing the data into the storage device 2 by the computing device 1 is reduced, and user experience is improved. In addition, the to-be-written data is directly obtained by the processor 531 from the processor 100 and sent to the storage device 2, and does not need to be temporarily stored in the memory 54 of the DPU card 5, to reduce a quantity of times of forwarding the data in the computing device 1 and occupation of the memory 54 of the DPU card 5, and help reduce a delay of accessing the storage device 2 by the computing device 1.

It may be understood that the process of step S701 to step S710 is merely an example. In some other embodiments, a part of steps may be combined or split, or execution bodies that are in the DPU card 5 and that perform the steps may be changed. This is not limited herein.

It may be understood that that the foregoing describes the technical solutions in embodiments of this application by using the example in which the computing device 1 writes the data into the storage device 2 is merely an example. The foregoing solutions can also be applied to a process in which the computing device 1 obtains data from the storage device 2. The DPU card 5 determines the valid access path, and the processor 531 receives the data from the storage device 2 by using the RDMA connection and the NoF connection and then directly sends the data to the processor 100.

In the foregoing embodiments, the computing device 1 includes only one DPU card 5. In some other embodiments, the computing device 1 may alternatively include a plurality of DPU cards 5, so that the computing device 1 can establish more network links by using the plurality of DPU cards, to avoid a case in which the target storage unit in the storage device 2 cannot be accessed when a DPU card 5 is faulty or all network links based on a DPU card 5 are faulty.

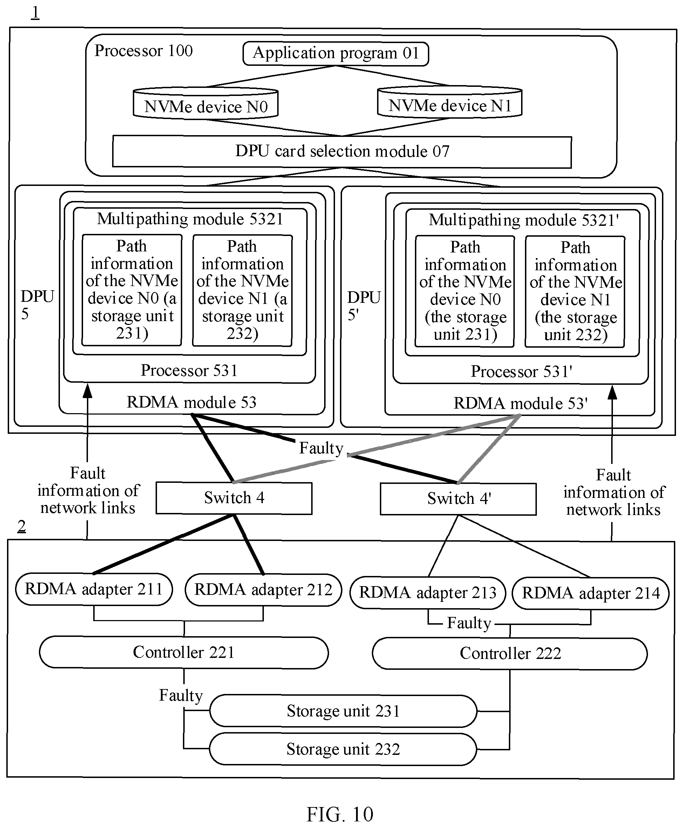

For example, FIG. 10 is a diagram of performing data exchange with a storage device 2 by a computing device 1 when the computing device 1 includes two DPU cards 5 according to some embodiments of this application.

As shown in FIG. 10, the computing device 1 includes a DPU card 5 and a DPU card 5'. The DPU card 5 may establish a communication connection to a storage unit 231/232 through a switch 4, an RDMA adapter 211/212, and a controller 221, and the DPU card 5' may establish a communication connection to the storage unit 231/232 through a switch 4', the RDMA adapter 211/212, and the controller 221. The DPU card 5' has a same structure as the DPU card 5, and has an NVMe device simulator 51', a processor 52', an RDMA module 53', and a processor 531' that respectively correspond to the processor NVMe device simulator 51, a processor 52, an RDMA module 53, and a processor 531.

In this case, there are eight network links between computing device 1 and the storage unit 231 or the storage unit 232. For example, there are the following eight network links between the computing device 1 and the storage unit 232:
DPU card 5→switch 4→RDMA adapter 211→controller 221→storage unit 231;
DPU card 5→switch 4→RDMA adapter 212→controller 221→storage unit 231;
DPU card 5→switch 4'→RDMA adapter 213 →controller 222→storage unit 231;
DPU card 5→switch 4'→RDMA adapter 214→controller 222→storage unit 231;
DPU card 5'→switch 4→RDMA adapter 211→controller 221→storage unit 232;
DPU card 5'→switch 4→RDMA adapter 212→controller 221→storage unit 232;
DPU card 5'→switch 4'→RDMA adapter 213→controller 222→storage unit 232; and
DPU card 5'→switch 4'→RDMA adapter 214→controller 222→storage unit 232.

Therefore, provided that any one of the foregoing eight network links is network-fault-free, the computing device 1 may access the storage unit 231 over the network-fault-free network link without. Specifically, as shown in FIG. 10, when an application program 01 needs to write data into the storage device 2, the computing device 1 may first send an NVMe write instruction to a DPU card selection module 07, and the DPU card selection module 07 forwards the NVMe write instruction to the DPU card 5 or the DPU card 5'. If a DPU card that first receives the NVMe write instruction has no valid access path to a target storage unit, the DPU card sends a card switching request to the DPU card selection module 07. Therefore, the DPU card selection module 07 may send the NVMe write instruction to the other DPU card in response to the card switching request, and the other DPU card responds to the NVMe write instruction.

With reference to the case shown in FIG. 10, the following describes a technical solution in an embodiment of this application by using an example in which a DPU card that first receives an NVMe write instruction is a DPU card 5.

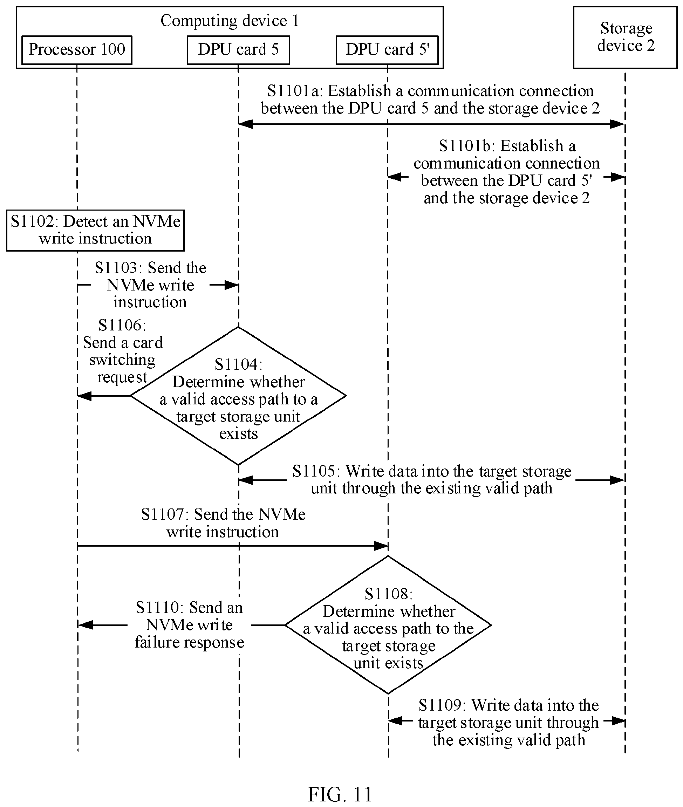

Specifically, FIG. 11 is a diagram of an interaction process of a data access method according to some embodiments of this application. As shown in FIG. 11, the process includes the following steps.

S1101a: Establish a communication connection between the DPU card 5 and a storage device 2.

For example, after the DPU card 5 is started, after an NVMe device simulator 51 mounts the DPU card 5 as an NVMe device to a processor 100, a processor 52 runs the foregoing NoF initiator, OFED, and driver to establish the communication connection between the DPU card 5 and the storage device 2, for example, an RDMA connection and a NoF connection.

It may be understood that in some other embodiments, the communication connection between the DPU card 5 and the storage device 2 may further include a connection of another type. This is not limited herein.

S1101b: Establish a communication connection between a DPU card 5' and the storage device 2.

The DPU card 5' establishes the communication connection to the storage device 2, for example, an RDMA connection and a NoF connection. For a specific establishment manner, refer to the descriptions of step S1101a or S701. Details are not described herein.

It may be understood that in some embodiments, S1101a and S1101b may be simultaneously performed.

S1102: The processor 100 detects an NVMe write instruction.

When an application program 01 needs to write data into a storage unit in the storage device 2, the processor 100 may detect the NVMe write instruction generated by the application program 01. In some embodiments, the NVMe write instruction may include an address that is of to-be-written data and that is in a data buffer 05, and an identifier of the storage unit (referred to as a target storage unit below) into which the data is to be written, for example, the foregoing LUN.

S1103: The processor 100 sends the NVMe write instruction to the DPU card 5.

After detecting the NVMe write instruction, the processor 100 sends the NVMe write instruction to the DPU card 5.

It may be understood that when the computing device 1 includes a plurality of DPU cards, the processor 100 may first send the NVMe write instruction to a DPU card that is first started, or a user or a developer of the computing device 1 may set a DPU card that first receives the NVMe write instruction. For example, in some other implementations, the processor 100 may first send the NVMe write instruction to the DPU card 5'.

S1104: The DPU card 5 determines whether a valid access path to the target storage unit exists.

For example, the DPU card 5 may determine whether the valid access path to the target storage unit exists by running a multipathing module 5321 by a processor 531. If the valid access path to the target storage unit exists, it indicates that data exchange may be performed with the target storage unit by using the DPU card 5, and step S1105 is performed; if no valid access path to the target storage unit exists, it indicates that data exchange needs to be performed with the target storage unit by using another DPU card, and step S1106 is performed. For a specific determining method, refer to the descriptions of step S704. Details are not described herein.

For example, in correspondence to the case shown in FIG. 9, because a communication link between an RDMA module 53 and a switch 4' is faulty, and a communication link between a controller 221 and a storage unit 231/232 is faulty, the DPU card 5 has no valid access path to the target storage unit, and step S1106 is performed.

S1105: The DPU card 5 writes data into the target storage unit through the existing valid access path.

For example, when determining that the valid access path to the target storage unit exists, the DPU card 5 writes the data into the target storage unit through the existing valid access path. For a specific process, refer to the descriptions of step S705 to step S710. Details are not described herein.

S1106: The DPU card 5 sends a card switching request to the processor 100.

For example, when determining that no valid access path to the target storage unit exists, the DPU card 5 sends the card switching request to the processor.

S1107: The processor 100 sends the NVMe write instruction to the DPU card 5'.

For example, the processor 100 sends the NVMe write instruction to the DPU card 5' in response to the card switching request. The NVMe write instruction may include the address that is of the to-be-written data and that is in the data buffer 05, and the identifier of the storage unit (referred to as the target storage unit below) into which the data is to be written, for example, the foregoing LUN.

S1108: The DPU card 5' determines whether a valid access path to the target storage unit exists.

For example, after receiving the NVMe write instruction, the DPU card 5' may determine, through a processor 531' based on the identifier that is of the target storage unit and that is in the NVMe write instruction, whether the valid access path to the target storage unit exists. If the valid access path exists, it indicates that the to-be-written data can be written into the target storage unit, and step S1009 is performed; if no valid access path exists, it indicates that the to-be-written data cannot be written into the target storage unit, and step S1110 is performed. For a specific determining step, refer to the descriptions of step S704. Details are not described herein.

For example, in correspondence to the case shown in FIG. 9, although the communication link between the controller 221 and the storage unit 231/232 is faulty, and a communication link between an RDMA adapter 213 and a controller 222 is faulty, a communication link sequentially through the switch 4', an RDMA adapter 214, and the controller 222 and connected to the storage unit 232 is normal, and the DPU card 5' may determine the communication link as the valid access path.

S1109: The DPU card 5' writes data into the target storage unit through the existing valid access path.

When determining the existing valid access path, the DPU card 5' writes the data into the target storage unit through the existing valid access path. For a specific process, refer to the related descriptions of step S705 to step S710. Details are not described herein.

For example, in correspondence to the case shown in FIG. 9, the DPU card 5' may write the to-be-written data into the storage unit 231 over the communication link sequentially through the switch 4', the RDMA adapter 214, and the controller 222 and connected to the storage unit 232.

S1110: The DPU card 5' sends an NVMe write failure response to the processor 100.

For example, when determining that no valid access path to the target storage unit exists, the DPU card 5' sends the NVMe write failure response to the NVMe device simulator 51.

According to the data access method provided in this embodiment of this application, when all network links between one DPU card and the target storage unit are faulty, the computing device 1 can switch to another DPU card to access the target storage unit, to help increase a success rate of accessing the target storage unit by the computing device 1, and improve user experience.

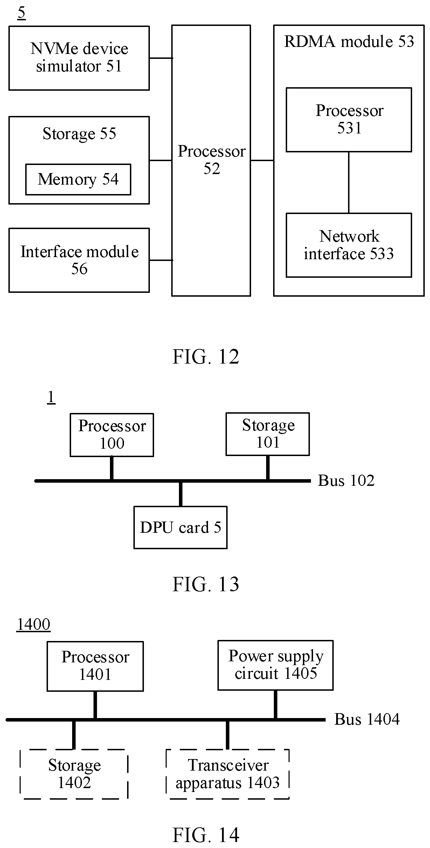

Further, FIG. 12 is a block diagram of a hardware structure of a DPU card 5 according to some embodiments of this application.

As shown in FIG. 12, the DPU card 5 includes an NVMe device simulator 51, a processor 52, an RDMA module 53, a storage 55, and an interface module 56, and the RDMA module 53 includes a processor 531 and a network interface 533. For functions and effects of the NVMe device simulator 51, the processor 52, a memory 54, and the processor 531, refer to the embodiments shown in FIG. 5 to FIG. 10. Details are not described herein again.

The network interface 533 is configured to implement a network connection between the DPU card 5 and another electronic device, for example, the foregoing storage device 2. The network interface 533 may include at least one Ethernet interface. The Ethernet interface may include but be not limited to an RJ-45 interface, an RJ-11 interface, an SC optical fiber interface, a fiber distributed data interface (fiber distributed data interface, FDDI), a console interface, and the like.

The storage 55 may include the memory 54, and may further include another volatile memory (volatile memory) or a non-volatile memory (non-volatile memory), configured to temporarily or permanently store data. In some embodiments, the storage 55 may be configured to store an instruction for the foregoing data access method, for example, instructions of the foregoing NoF initiator 521, OFED, driver 522, multipathing module 5321, and NoF engine 532, or may be configured to store data related to the foregoing data access method, for example, a network status of each network link between the DPU card 5 and another electronic device, for example, the storage device 2.

The interface module 56 may be any interface of a symbol NVMe, and is configured to be connected to an electronic device, for example, configured to be connected to a computing device. For example, the interface module 54 may include but be not limited to a peripheral component interconnect (peripheral component interconnect, PCI) interface, a PCIe interface, an M.2 interface, and the like.

It may be understood that the structure, shown in FIG. 12, of the DPU card 5 is merely an example, and in some other embodiments, the DPU card 5 may include more or fewer modules, or may combine or split a part of modules. This is not limited herein.

Further, FIG. 13 is a diagram of a structure of a computing device 1 according to some embodiments of this application. As shown in FIG. 13, the computing device 1 includes a processor 100, a storage 101, a bus 102, and the foregoing DPU card 5.

The processor 100 may include any one or more of processors such as a central processing unit (central processing unit, CPU), a graphics processing unit (graphics processing unit, GPU), a microprocessor (microprocessor, MP), or a digital signal processor (digital signal processor, DSP). The processor 100 may be configured to: run an application program, and send an NVMe instruction to the DPU card 5 based on a requirement of the application program, so that the DPU card 5 can store, according to the methods provided in the foregoing embodiments, data corresponding to the NVMe instruction in a storage device connected to the DPU card 5, or read data from a storage device connected to the DPU card 5.

It may be understood that in some embodiments, the processor 100 may further include a data buffer, configured to temporarily store data to be written into the storage device connected to the DPU card 5 or data read from the storage device connected to the DPU card 5.

The storage 101 may include a volatile memory (volatile memory), for example, a random access memory (random access memory, RAM). The storage 100 may further include a non-volatile memory (non-volatile memory), for example, a read-only memory (read-only memory, ROM), a flash memory, a hard disk drive (hard disk drive, HDD), or a solid-state drive (solid-state drive, SSD).

The bus 102 is configured to couple the processor 100, the storage 101, and the DPU card 5. For example, in some embodiments, the bus 102 may include a PCIe bus, and the DPU card 5 as an NVMe device is mounted to the processor 100 through the PCIe bus.

The DPU card 5 and another electronic device, for example, the foregoing storage device 2, may establish a network connection, and store data in the another electronic device or read data from the another electronic device according to the methods provided in the foregoing embodiments.

It may be understood that in some embodiments, the DPU card 5 may be a part of the computing device 1, in other words, the DPU card 5 is installed in the computing device 1. In some other embodiments, the DPU card 5 may alternatively be an independent component, and after being connected to the computing device 1, the DPU card 5 may access the storage device according to the data access method provided in the foregoing embodiments.

It may be understood that in some embodiments, the DPU card 5 may be installed inside the computing device 1, or may be disposed outside the computing device 1. This is not limited herein.

It may be understood that the computing device 1 may be any electronic device that can be connected to the DPU card 5, and includes but is not limited to a laptop computer, a desktop computer, a server, a workstation, and the like.

It may be understood that the structure, shown in FIG. 13, of the computing device 1 is merely an example. In some other embodiments, the computing device 1 may include more or fewer modules. This is not limited herein.

An embodiment of this application further provides a data access apparatus that may be configured to implement a function performed by any DPU card or any computing device in the foregoing method embodiments. The following specifically describes a structure and a function of an access apparatus 1400 with reference to FIG. 14 in embodiments of this application. FIG. 14 is a block diagram of the data access apparatus 1400 according to an embodiment of this application. The data access apparatus 1400 may include at least one processor 1401 and a power supply circuit 1405. When related program instructions are executed in the at least one processor 1401, the data access apparatus 1400 may implement a function of the DPU card or the computing device in any one of the data access methods provided in all the foregoing embodiments and the designs thereof. The power supply circuit 1405 may be configured to supply power to the processor 1401. Optionally, the power supply circuit 1405 may be located in a same chip as the processor 1401, or may be located in a chip other than a chip in which the processor 1401 is located. Optionally, the data access apparatus 1400 may further include at least one storage 1402. The storage 1402 may be configured to store related program instructions and/or data that are/is required. Optionally, the data access apparatus 1400 may further include a transceiver apparatus 1403. The transceiver apparatus 1403 may be used by the data access apparatus 1400 to perform communication interaction with another communication device (for example, a wireless or wired access network device, a computing device, or a computing device, which is not limited herein), for example, exchange control signaling and/or service data. The transceiver apparatus 1403 may be implemented by using a circuit having a communication transceiver function. Optionally, as shown in FIG. 14, the data access apparatus 1400 may further include a bus 1404, and parts of the data access apparatus 1400 may be interconnected through the bus 1404.

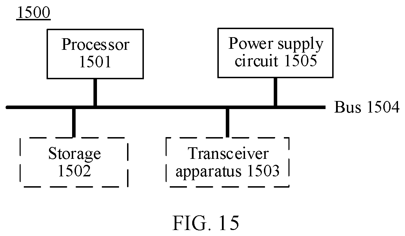

An embodiment of this application further provides a system chip 1500. The following specifically describes a structure and a function of the system chip 1500 with reference to FIG. 15 in embodiments of this application. FIG. 15 is a block diagram of the system chip 1500 according to the embodiment of this application. The system chip 1500 may be used in any one of the foregoing DPU cards or the foregoing computing devices. Through processing of the system chip, a DPU card or a computing device can perform an operation of the DPU card or the computing device in any one of the data access methods provided in all embodiments of this application and the possible design solutions thereof. As shown in FIG. 15, the system chip 1500 may include at least one processor 1501 and a power supply circuit 1505. When related program instructions are executed in the at least one processor 1501, an operation of the DPU card or the computing device in any one of the data access methods provided in all embodiments of this application and the possible design solutions thereof is implemented. The power supply circuit 1505 may be configured to supply power to the processor 1501. Optionally, the power supply circuit 1505 may be located in a same chip as the processor 1501, or may be located in a chip other than a chip in which the processor 1501 is located. Optionally, the system chip 1500 may further include at least one storage 1502. The storage 1502 stores the related program instructions. Optionally, the system chip 1500 may further include an interface circuit 1503 and a bus 1504. The at least one processor 1501, the at least one storage 1502, and the interface circuit 1503 are coupled through the bus 1504. The system chip 1500 interacts with a computing device, a storage device, or another device in a network by using the interface circuit 1503. Optionally, the processor 1501 and the storage 1502 may be combined into one processing apparatus. For example, during specific implementation, the storage 1502 may alternatively be integrated into the processor 1501, or may be independent of the processor 1501.

It may be understood that for types and descriptions of the processor 1401 and the processor 1501, refer to the related descriptions of the processor 52 and the processor 531. Details are not described herein. It may be understood that for types and descriptions of the storage 1402 and the storage 1502, refer to the related descriptions of the storage 55 and the storage 101. Details are not described herein.

Embodiments of a mechanism disclosed in this application may be implemented in hardware, software, firmware, or a combination of these implementation methods. Embodiments of this application may be implemented as a computer program or program code that is executed on a programmable system, and the programmable system includes at least one processor, a storage system (including volatile and non-volatile memories and/or a storage element), at least one input device, and at least one output device.

The program code may be applied to input instructions, to perform functions described in this application and generate output information. The output information may be applied to one or more output devices in a known manner. For a purpose of this application, a processing system includes any system having a processor such as a digital signal processor (DSP), a microcontroller, an application-specific integrated circuit (ASIC), or a microprocessor.

The program code may be implemented in a high-level programming language or an object-oriented programming language to communicate with the processing system. The program code can alternatively be implemented in an assembly language or a machine language when needed. Actually, the mechanisms described in this application are not limited to a scope of any particular programming language. In either case, the language may be a compiled language or an interpreted language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed via a network or through another computer-readable medium. Therefore, the machine-readable medium may include any mechanism for storing or transmitting information in a machine (for example, computer)-readable form, including but not limited to a floppy disk, a compact disc, an optical disc, a read-only memory (CD-ROMs), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory configured to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in the machine (for example, computer)-readable form.

In the accompanying drawings, some structural or method features may be shown in a particular arrangement and/or sequence. However, it should be understood that such a particular arrangement and/or sequence may not be needed. In some embodiments, these features may be arranged in a manner and/or a sequence different from those/that shown in the descriptive accompanying drawings. In addition, inclusion of the structural or method features in a particular figure does not imply that such features are needed in all embodiments, and in some embodiments, these features may not be included or may be combined with another feature.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that in the examples and this specification of this patent, relational terms such as first and second are used only to differentiate an entity or operation from another entity or operation, and do not require or imply that any actual relationship or sequence exists between these entities or operations. Moreover, the term "include" or any other variant thereof is intended to cover a non-exclusive inclusion, so that a process, a method, an article, or a device that includes a list of elements not only includes those elements but also includes another element that is not expressly listed, or further includes an element inherent to this process, method, article, or device. Without more limitations, an element limited by "include a/an" does not exclude other same elements existing in the process, the method, the article, or the device which includes the element.

Although this application has been illustrated and described with reference to some preferred embodiments of this application, a person of ordinary skill in the art should understand that various changes may be made to this application in form and detail without departing from the spirit and scope of this application.

## Claims

1. A data access method, applied to a computing device, wherein the computing device comprises a first network interface card; and the method comprises:
detecting, by the first network interface card, an access instruction, wherein the access instruction is for accessing a target storage in a storage device;
performing, by the first network interface card, fault detection, and determining a network-fault-free first network link from a plurality of network links existing between the first network interface card and the target storage; and
accessing, by the first network interface card, the target storage over the first network link.

2. The method according to claim 1, wherein the first network interface card accesses the target storage over the first network link according to a NoF protocol and an RDMA protocol.

3. The method according to claim 2, wherein the first network interface card is connected to a mainboard of the computing device through a bus interface, the computing device further comprises a first processor disposed on the mainboard, and the access instruction is generated by the first processor.

4. The method according to claim 3, wherein the first network interface card comprises a second processor, and the second processor accesses the target storage over the first network link according to the NoF protocol and the RDMA protocol.

5. The method according to claim 4, wherein that the second processor accesses the target storage over the first network link according to the NoF protocol and the RDMA protocol comprises at least one of the following:
when the access instruction is for writing first data into the target storage, the second processor obtains the first data from the first processor, and writes the first data into the target storage over the first network link according to the NoF protocol and the RDMA protocol; or
when the access instruction is for reading second data from the target storage, according to the NoF protocol and the RDMA protocol, the second processor obtains the second data from the target storage and sends the second data to the first processor.

6. The method according to claim 4, wherein the first network interface card further comprises a third processor; and the second processor accesses the target storage over the first network link according to the NoF protocol and the RDMA protocol by using a NoF connection and an RDMA connection that are between the first network interface card and the storage device, wherein the NoF connection and the RDMA connection are established by the third processor with the storage device when the first network interface card is started.

7. The method according to claim 1, wherein the computing device further comprises a second network interface card; and the method further comprises:
when the first network interface card determines that no first network link exists between the first network interface card and the target storage, accessing, by the second network interface card, the target storage over a network-fault-free second network link between the second network interface card and the target storage.

8. The method according to claim 1, wherein the first network interface card determines the network-fault-free first network link from the plurality of network links existing between the first network interface card and the target storage in the following manner:
when receiving, from the storage device, no information indicating that the first network link is faulty, the first network interface card determines that the network-fault-free first network link between the first network interface card and the target storage exists.

9. The method according to claim 6, wherein the second processor or the third processor is any one of the following processors: a field programmable logic gate array, a complex programmable logic device, a domain-specific architecture, a network processor, a digital signal processing circuit, a microcontroller, or a programmable controller.

10. The method according to claim 1, wherein the access instruction is an NVMe instruction.

11. A network interface card, comprising:
a bus interface, configured to be connected to a computing device;
a network interface, configured to be connected to a remote storage device via a network; and
a fourth processor, configured to: perform fault detection when receiving an instruction that is sent by the computing device and that is for accessing a target storage in the storage device, determine a network-fault-free first network link from a plurality of network links existing between the network interface card and the storage device, and access the target storage over the first network link.

12. The network interface card according to claim 11, wherein the network interface card further comprises a fifth processor, wherein the fifth processor is configured to: when the network interface card is started, establish a NoF connection and an RDMA connection that are between the network interface card and the storage device; and the fourth processor accesses the target storage over the first network link in the following manner:
the fourth processor accesses the target storage according to a NoF protocol and an RDMA protocol by using the NoF connection and the RDMA connection.

13. The network interface card according to claim 12, wherein the fourth processor accesses the target storage by using the NoF connection and the RDMA connection in the following manner:
when the access instruction is for writing first data into the target storage, the fourth processor obtains the first data from the computing device, and writes the first data into the target storage over the first network link according to the NoF protocol and the RDMA protocol; and/or
when the access instruction is for reading second data from the target storage, according to the NoF protocol and the RDMA protocol, the fourth processor obtains the second data from the target storage and sends the second data to the computing device.

14. The network interface card according to claim 12, wherein the fourth processor or the fifth processor is any one of the following processors: a field programmable logic gate array, a complex programmable logic device, a domain-specific architecture, a network processor, a digital signal processing circuit, a microcontroller, and a programmable controller.

15. The network interface card according to claim 11, wherein the access instruction is an NVMe instruction.

16. An electronic device, wherein the electronic device comprises the network interface card according to any one of claims 9 to 13.

17. An electronic device, comprising:
a network interface card, wherein the network interface card comprises a storage and at least one processor, wherein
the storage stores instructions, and when the instructions are executed by the at least one processor, the electronic device is enabled to implement the data access method according to any one of claims 1 to 10.

18. A computer-readable storage medium, wherein the computer-readable storage medium stores instructions, and when the instructions are executed by a network interface card, the network interface card is enabled to implement the data access method according to any one of claims 1 to 10.

19. A data access apparatus, comprising at least one processor and a power supply circuit, wherein the power supply circuit is configured to supply power to the processor, and related program instructions are executed in the at least one processor, to enable the data access apparatus to implement a function of the network interface card or the computing device in the data access method according to any one of claims 1 to 10.
